Europäisches Patentamt

European Patent Office

Office européen des brevets

(19)

(11) Numéro de publication : **0 399 932 B1**

(12) **FASCICULE DE BREVET EUROPEEN**

(45) Date de publication du fascicule du brevet :
**09.12.92 Bulletin 92/50**

(51) Int. Cl.⁵ : **B62D 59/02**

(21) Numéro de dépôt : **90430011.8**

(22) Date de dépôt : **25.05.90**

(54) **Véhicules routiers composés d'une remorque temporairement automotrice attelée à un véhicule tracteur.**

(30) Priorité : **26.05.89 FR 8907224**

(43) Date de publication de la demande :
**28.11.90 Bulletin 90/48**

(45) Mention de la délivrance du brevet :
**09.12.92 Bulletin 92/50**

(84) Etats contractants désignés :
**AT BE CH DE DK ES FR GB GR IT LI LU NL SE**

(56) Documents cités :
**CH-A- 269 375**
**FR-A- 1 362 478**
**FR-A- 2 379 394**
**US-A- 3 888 142**

(73) Titulaire : **INDUSTRIELLE VENELLOISE DE CONSTRUCTION DE MATERIEL ROULANT-I.VE**
**68, rue Albert Einstein**
**F-13290 Les Milles (FR)**

(72) Inventeur : **Montel, Henri**
**10, Le Petit Prince**
**F-13770 Venelles (FR)**
Inventeur : **Vavrille, René**
**22, Lot Les Demeures**
**F-13290 Les Milles (FR)**

(74) Mandataire : **Moretti, René et al**
**c/o Cabinet BEAU DE LOMENIE**
**"Prado-Mermoz" 232, Avenue du Prado**
**F-13008 Marseille (FR)**

EP 0 399 932 B1

## Description

La présente invention a pour objet des véhicules routiers composés d'une remorque temporairement automotrice attelée à un véhicule tracteur.

Le secteur technique de l'invention est celui de la construction des véhicules routiers, notamment des citernes chargées de l'avitaillement en carburant des avions sur les aéroports ou des gros navires dans les ports.

La règlementation des aéroports interdit aux véhicules automobiles d'effectuer des marches arrière pour éviter des risques d'accident ou d'incendie. Cette règlementation interdit donc d'effectuer sur les aéroports des manoeuvres d'attelage d'une remorque derrière un véhicule qui nécessiteraient une marche arrière du véhicule.

Bien que cette interdiction de marche arrière ne soit pas toujours respectée, elle est très surveillée dans le cas de citernes routières transportant des carburants inflammables.

De plus, les camions-citernes utilisés sur les aéroports sont généralement des véhicules semi-remorques, dont les manoeuvres en marche arrière sont difficiles.

On connaît des engins de chantier comportant une remorque qui est attelée derrière un véhicule tracteur et dont les roues peuvent être rendues automotrices.

Le brevet FR-A-1 362 478 (Cie des Ateliers et Forges de la Loire) décrit des engins de chantiers comportant une remorque dont les roues sont équipées de moteurs hydrauliques qui peuvent être alimentés individuellement, soit séparément, soit simultanément à partir d'un groupe hydraulique monté sur le tracteur, lequel groupe est relié à la remorque par un élément tubulaire qui forme l'attelage entre le tracteur et la remorque. Le but recherché est de rendre temporairement motrices les roues de la remorque dans les passages difficiles afin d'améliorer l'adhérence au sol.

Le brevet CH-A-269 375 (Eidg. Konstruktionswerkstaette) décrit des véhicules composés d'un tracteur et d'une remorque qui sont reliés par un attelage détachable. Les roues de la remorque situées sur un même essieu sont équipées de moteurs hydrauliques qui sont alimentés en fluide comprimé par une pompe située sur le tracteur ou sur une remorque auxiliaire.

Le brevet US-A- 3 888 142 (H. Ziegle) décrit un véhicule routier composé d'une remorque attelée derrière une semi-remorque. Le moteur du tracteur de la semi-remorque entraîne, par l'intermédiaire d'un câble d'entraînement flexible, un différentiel qui entraîne les deux roues d'un chariot, sur lequel la remorque prend appui.

Ces trois brevets antérieurs ne décrivent pas des véhicules comportant une remorque qui peut être rendue automotrice et qui peut être dirigée sur une courte distance, tout en étant séparée du véhicule tracteur.

Les remorques décrites dans ces documents antérieurs ne peuvent pas être attelées derrière un véhicule tracteur sans déplacer celui-ci en marche arrière.

Un objectif de la présente invention est de procurer des véhicules routiers comportant une remorque qui peut être attelée derrière un véhicule tracteur, sans avoir à reculer celui-ci, notamment des véhicules comportant un remorque porte-citerne contenant des carburants qui peut être attelée de façon amovible derrière une semi-remorque portant elle-même une citerne remplie de carburant pour ravitailler en carburants des avions ou des bateaux.

Un autre objectif de la présente invention est de procurer des remorques routières, notamment des remorques porte-citerne. pouvant être manoeuvrées sur de courtes distances, indépendamment du véhicule tracteur, ce qui permet de les rentrer dans un hangar ou de les ranger sur un parking situés sur un aéroport, sans avoir à manoeuvrer le véhicule tracteur en marche arrière.

Les véhicules routiers selon l'invention sont composés, de façon connue, d'une remorque qui est attelée de façon amovible à un véhicule tracteur et dont au moins deux roues. montées sur l'essieu avant, sont équipées chacune d'un moteur hydraulique. lesquels moteurs hydrauliques peuvent être alimentés temporairement. soit simultanément, soit séparément à partir d'un groupe hydraulique porté par le véhicule tracteur ou par un véhicule auxiliaire.

Les objectifs de l'invention sont atteints au moyen d'un véhicule dans lequel les moteurs hydrauliques équipant les roues de la remorque sont reliés au groupe hydraulique par des canalisations flexibles et dans lequel l'essieu de la remorque est relié au châssis de celle-ci par un pivot à axe vertical, de telle sorte que ladite remorque peut être déplacée et dirigée de façon autonome lorsqu'elle est dételée dudit véhicule tracteur.

Selon un mode de réalisation préférentiel, le véhicule tracteur porte un groupe hydraulique qui est entraîné en rotation par le moteur dudit véhicule et ledit véhicule tracteur porte un enrouleur sur lequel une canalisation flexible ayant une longueur d'une dizaine de mètres, est enroulée.

L'invention a pour résultat de nouveaux véhicules routiers composés d'un véhicule tracteur et d'une remorque qui peut être rendue temporairement automotrice et qui peut être dirigée grâce au fait que les deux roues montées sur un même essieu peuvent être alimentées séparément.

L'invention a également pour résultat de nouvelles remorques destinées à équiper des véhicules selon l'invention.

Selon un mode de réalisation préférentiel, le groupe hydraulique alimentant les moteurs des roues de la remorque comporte une pompe qui est portée par le véhicule tracteur et qui est entraînée par le moteur de propulsion du véhicule tracteur.

En variante, le groupe hydraulique peut être porté par un véhicule auxiliaire.

Dans les deux cas, les moteurs hydrauliques équipant les roues de la remorque sont reliées au groupe hydraulique par des canalisations flexibles ayant une longueur d'une dizaine de mètres.

La combinaison de cette liaison flexible et du fait que la remorque peut être rendue temporairement automotrice et peut être dirigée, permettent de déplacer la remorque et de la diriger de façon autonome, sans qu'elle soit attelée au véhicule tracteur, avec une autonomie de déplacement égale à la longueur des canalisations flexibles, qui la relie au véhicule tracteur ou au véhicule auxiliaire portant le groupe hydraulique.

Cette autonomie permet, par exemple, d'atteler la remorque en la faisant avancer vers le véhicule tracteur, ce qui présente l'avantage d'éviter d'avoir à manoeuvrer celui-ci en marche arrière. Cet avantage est particulièrement important dans le cas des véhicules porte-citerne destinés à avitailler les avions en carburant sur les aéroports.

Grâce à cet avantage, il devient possible d'utiliser sur les aéroports des ensembles routiers composés d'une semi-remorque porte-citerne et d'une ou plusieurs remorques porte-citerne attelées derrière la semi-remorque, ce qui permet d'augmenter considérablement les volumes de carburant disponibles, sans augmenter le nombre de véhicules tracteurs.

On connaît déjà des véhicules routiers automoteurs dont les roues non motrices sont équipées de moteurs hydrauliques, incorporés dans les roues, qui peuvent être alimentés temporairement à partir d'un groupe hydraulique entraîné par le moteur du véhicule.

On connaît également des véhicules ou des engins de chantiers comportant une remorque dont les roues sont équipées de moteurs hydrauliques qui peuvent être alimentés temporairement.

Dans ces applications, les moteurs ont une fonction d'assistance temporaire destinée à répartir l'effort moteur sur plusieurs roues pour améliorer les conditions d'adhérence, afin de franchir des passages difficiles.

Dans la présente application, les moteurs ont une fonction totalement différente et cette nouvelle application à des remorques, ne découle pas avec évidence des applications connues sur des véhicules automoteurs.

La description suivante se réfère aux dessins annexés qui représentent, sans aucun caractère limitatif, un exemple de réalisation d'une remorque selon l'invention.

La figure 1 représente une remorque porte-citerne selon l'invention, attelée derrière une semi-remorque portant une citerne.

La figure 2 est une vue en élévation d'un essieu d'une remorque selon la figure 1.

La figure 3 est une vue en élévation de l'attelage reliant une remorque selon l'invention à un véhicule tracteur.

La figure 4 est une vue en élévation d'un dispositif d'attelage.

La figure 5 est une vue en perspective du dispositif d'accouplement entre les canalisations reliant deux citernes portées l'une par une semi-remorque et l'autre, par une remorque attelée derrière la semi-remorque.

La figure 6 est une coupe axiale de l'extrémité d'un essieu équipé d'un moteur hydraulique.

La figure 7 est un schéma des circuits hydrauliques alimentant les deux moteurs d'un même essieu.

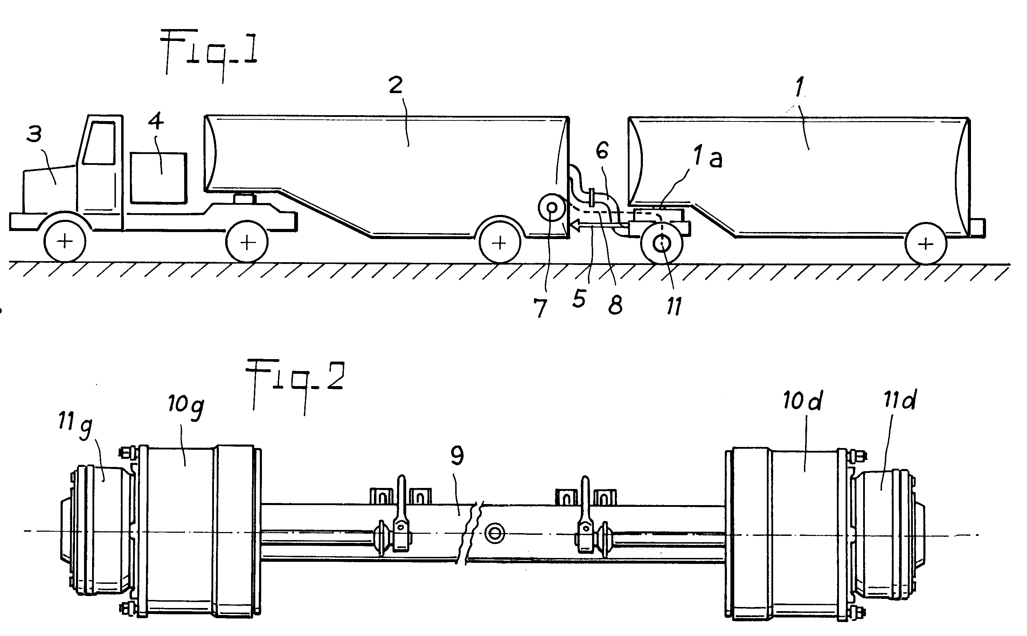

La figure 1 représente une remorque porte-citerne 1 attelée derrière une semi-remorque porte-citerne 2, qui est attelée derrière un tracteur 3.

Les deux citernes sont destinées par exemple à contenir un hydrocarbure inflammable pour ravitailler en carburant des avions sur un aéroport ou des navires dans une enceinte portuaire.

Le véhicule tracteur 3 est de tout type connu. Il porte notamment un groupe hydraulique 4 qui est entraîné par le moteur du tracteur et qui délivre de l'huile sous pression.

La semi-remorque 2 est également de tout type connu. Elle est équipée d'une citerne qui peut contenir par exemple 40.000 litres de kérosène.

Afin d'augmenter la capacité d'avitaillement, on attelle derrière la semi-remorque 2 une remorque 1, qui porte une citerne qui contient par exemple 20.000 litres.

On peut atteler plusieurs remorques l'une derrière l'autre.

La remorque 1 est reliée à la semi-remorque par une barre d'attelage 5 et par une canalisation flexible 6, de gros diamètre, qui met en communication les deux citernes.

Une remorque 1 selon l'invention comporte au moins deux roues montées sur l'essieu avant, qui sont équipées chacune d'un moteur hydraulique 11, incorporé dans la roue. Les deux moteurs hydrauliques 11, montés sur un même essieu, peuvent être alimentés simultanément. Dans ce cas, la remorque se déplace en ligne droite. Les deux moteurs hydrauliques peuvent également être alimentés séparément, de sorte que l'on peut ainsi faire pivoter la remorque, comme dans le cas d'un véhicule équipé d'un blocage du différentiel situé sur la transmission entre l'arbre moteur et les roues motrices.

L'essieu avant est relié au châssis de la remorque par un pivot (1a) à axe vertical, de sorte que l'essieu peut s'orienter lorsque les deux moteurs hydrauliques sont alimentés différemment et que la remorque peut donc être dirigée de façon autonome par la seule action des moteurs hydrauliques.

La semi-remorque 2 porte un enrouleur 7, sur lequel est enroulé un flexible 8, dans lequel circule le liquide sous pression délivré par le groupe hydraulique 4, afin d'alimenter les moteurs hydrauliques 11 incorporés dans les roues de la remorque.

La longueur de flexible enroulée sur l'enrouleur 7 permet de continuer à alimenter les moteurs hydrauliques, même lorsque la remorque 1 n'est pas attelée à la semi-remorque, ce qui confère à la remorque une autonomie de déplacement par rapport à la semi-remorque égale à la longueur de flexible enroulée sur l'enrouleur, qui est par exemple de l'ordre d'une dizaine de mètres.

Ainsi, il est possible d'approcher la semi-remorque de la remorque sans effectuer de marche arrière de la semi-remorque, de connecter le flexible 8 porté par l'enrouleur à la remorque 1, puis de déplacer la remorque en la dirigeant, en utilisant l'un ou l'autre des moteurs hydrauliques pour l'amener dans l'alignement de la semi-remorque, puis de faire avancer la remorque 1 pour l'atteler derrière la semi-remorque, sans avoir à manoeuvrer la semi-remorque en marche arrière.

On peut également, de la même façon, sortir la remorque d'un hangar ou la rentrer dans celui-ci, en utilisant les moteurs hydrauliques équipant l'essieu de la remorque et en connectant la remorque à la semi-remorque au moyen du flexible 8.

Il est précisé qu'en variante, au lieu d'équiper l'essieu avant de deux roues motorisées, on peut équiper l'essieu arrière de deux roues entraînées par des moteurs hydrauliques qui peuvent être alimentés en huile simultanément ou séparément.

Selon une autre variante, on peut équiper les quatre roues de la remorque 1 de moteurs hydrauliques et, dans ce cas, un distributeur hydraulique permet d'alimenter en huile, soit les quatre moteurs, soit les deux moteurs de l'essieu avant ou ceux de l'essieu arrière, qui peuvent être alimentés séparément pour diriger la remorque.

On connaît des véhicules ou des engins automoteurs comportant des roues qui ne sont pas entraînées par le moteur du véhicule et qui sont équipées de moteurs hydrauliques qui ont pour but de répartir temporairement l'effort de propulsion sur les quatre roues, lorsque les conditions d'adhérence ou de terrain sont mauvaises.

Les moteurs hydrauliques sont alimentés en huile par une pompe qui est entraînée par le moteur du véhicule. Lorsque l'assistance temporaire n'est plus nécessaire, la pompe est arrêtée. Les moteurs hydrauliques utilisés sont des petits moteurs qui sont intégrés dans la roue et qui comportent une partie fixe fixée aux fusées de l'essieu et une partie mobile fixe au moyeu de la roue.

Avantageusement, une remorque selon l'invention comporte deux roues montées aux deux extrémités d'un essieu, qui sont équipées de moteurs hydrauliques incorporés à la roue du même type que ceux qui sont utilisés pour une assistance temporaire sur les roues porteuses et non motrices d'un véhicule ou d'un engin automoteur.

La figure 2 est une vue en élévation d'un essieu 9 de remorque selon l'invention. Les repères 10d et 10g représentent les tambours de frein. Les repères 11d et 11g représentent deux moteurs hydrauliques montés aux deux extrémités de l'essieu, entraînant chacun en rotation le moyeu d'une roue.

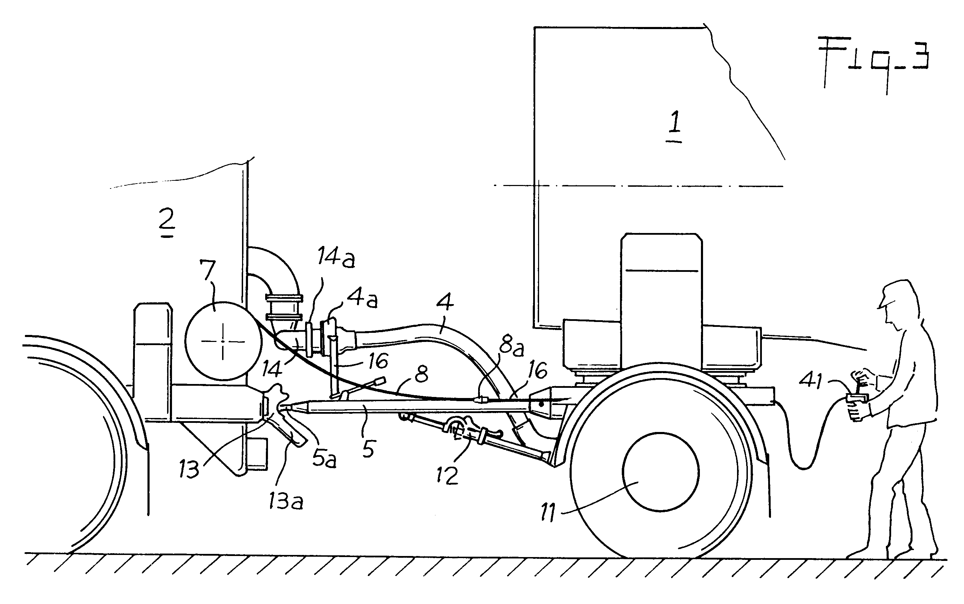

La figure 3 est une vue en élévation à plus grande échelle, sur laquelle on voit l'arrière de la semi-remorque 2 et l'avant de la remorque 1 attelée derrière la semi-remorque par une flèche ou barre d'attelage amovible 5.

La flèche ou barre 5 est équipée d'un équilibreur 12 qui est articulé à la fois au châssis de la remorque 1 et à la flèche ou barre 5, et dont la longueur est réglable, par exemple au moyen d'une came, de sorte qu'il permet de maintenir la flèche 5 à l'horizontale pendant les opérations d'attelage.

La flèche 5 porte à son extrémité avant un anneau 5a qui vient s'engager dans un dispositif d'attelage 13 fixé à l'extrémité arrière du châssis de la semi-remorque.

Le dispositif d'attelage comporte une bavette de guidage 13a qui forme une rampe, le long de laquelle l'anneau 5a glisse pour venir se placer en position d'attelage.

On voit sur la figure 3 une des deux canalisations flexibles 4 qui relient la citerne de la remorque 1 à la citerne de la semi-remorque 2. Chaque canalisation 4 porte, à son extrémité avant, une tête d'accouplement 4a qui permet de connecter la canalisation sur un raccord 14a, situé à l'extrémité de l'un des deux tubes rigides 14 équipant l'arrière de la semi-remorque.

Les deux têtes d'accouplement 4a sont équipées d'un dispositif 15 servant à équilibrer et à positionner simultanément les deux têtes d'accouplement dans l'alignement des brides 14.

On voit, en outre, sur la figure 3, un enrouleur 7 équipé d'un ressort de rappel, sur lequel est enroulé un flexible double 8, qui peut être connecté sur un raccord rapide 8a, situé à l'extrémité d'une canalisation double 16, qui fait partie de la remorque et qui alimente en huile deux moteurs hydrauliques 11, situés par exemple aux deux extrémités de l'essieu avant. L'autre extrémité du flexible 8 est connectée, par l'intermédiaire d'un distributeur rotatif, à une tuyauterie double, portée par la semi-remorque et alimentée en huile sous pression par le groupe hydraulique 4 équipant le tracteur 3 de la semi-remorque.

On a représenté sur la figure 3 un opérateur tenant dans ses mains un boîtier de commande électrique 41 à huit positions, par exemple un manipulateur référence XD2 EC 1111, vendu par la TELEMECANIQUE, qui lui permet d'actionner des distributeurs hydrauliques à tiroir commandés par des électro-aimants, lesquels distributeurs sont intercalés entre la canalisation 16 et les moteurs hydrauliques 11. Selon les positions des tiroirs, le distributeur alimente en huile les deux moteurs simultanément, ce qui permet de déplacer la remorque en ligne droite ou bien il alimente un seul des deux moteurs, ce qui permet de diriger la remorque.

La figure 4 est une vue en élévation du dispositif d'attelage 13 et de l'anneau d'attelage 5a en position prêt à être attelé.

Le dispositif d'attelage 13 comporte un axe vertical 17, qui est déplaçable verticalement par un levier 18 articulé au corps du dispositif 13. Une fois l'anneau 5a en place, on descend l'axe 17 à l'intérieur de celui-ci.

Le dispositif d'attelage comporte une butée 19, contre laquelle l'anneau 5a vient s'appuyer lorsque l'axe 17 est en place dans l'anneau.

On voit sur la figure 4 la bavette de guidage 13a, qui forme une rampe inclinée en descendant vers l'arrière.

Lorsque la remorque 1 avance vers la semi-remorque, l'anneau 5a glisse le long de la bavette 13a pour venir occuper la position d'attelage.

Une fois l'attelage effectué, la bavette 5a peut être rabattue vers le bas.

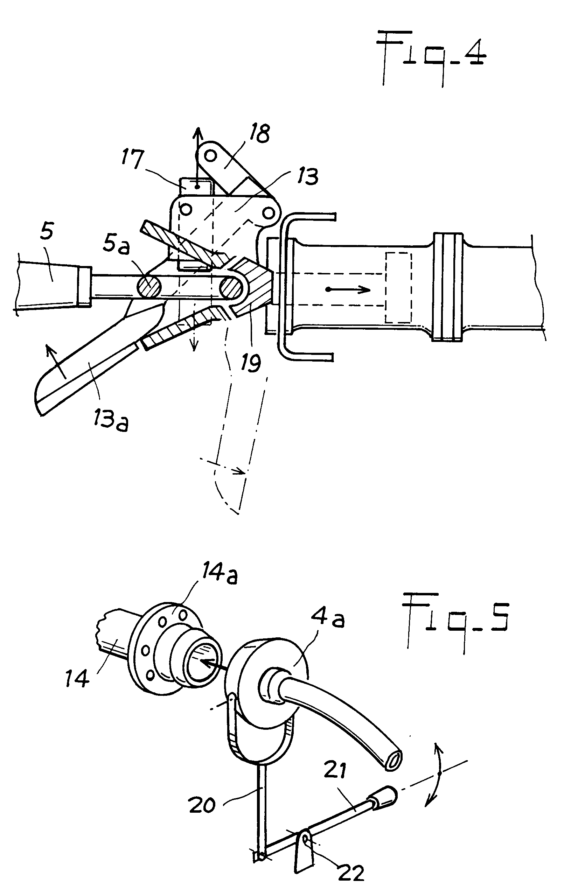

La figure 5 est une vue en perspective sur laquelle on voit l'extrémité d'une tuyauterie rigide 14 fixée à l'arrière de la semi-remorque, qui est équipée d'un demi-raccord 14a, qui est avantageusement un raccord rapide selon la norme AP1 1584, qui nécessite seulement un mouvement de translation pour effectuer les opérations d'accouplement et de désaccouplement.

On voit également sur la figure 5 une tête d'accouplement 4a, qui est complémentaire du demi-raccord 14a, avec lequel elle forme un raccord étanche. La tête d'accouplement 4a est montée sur un support en forme de fourche, qui est relié à une extrémité d'un levier 21, qui pivote autour d'une articulation 22, fixée à la flèche d'attelage 5.

En agissant manuellement sur le levier 21, on règle la position en hauteur de la tête d'accouplement 4a, pour qu'elle corresponde à la position en hauteur du demi-raccord 14a.

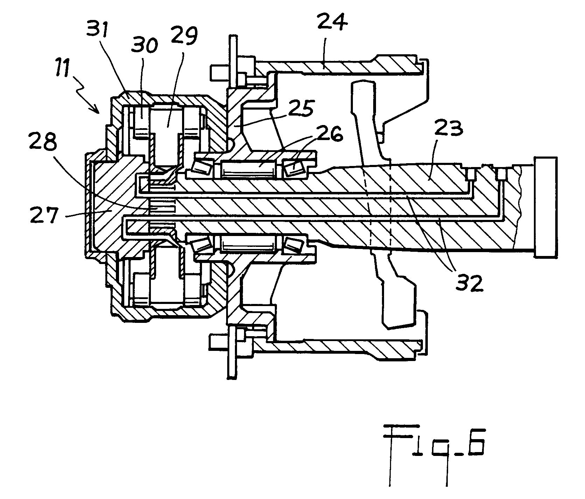

La figure 6 est une coupe axiale de l'extrémité d'un essieu d'une remorque 1, équipée d'un moteur hydraulique. Le repère 23 désigne la fusée de l'essieu, c'est-à-dire l'extrémité de l'essieu. Le repère 24 représente le tambour de frein. Le repère 25 représente le moyeu de la roue, qui est monté sur des roulements 26. Le repère 11 représente un moteur hydraulique. Celui-ci comporte un stator 27, qui est engagé sur des cannelures 28 portées par l'extrémité de la fusée. Le stator 27 porte des cylindres radiaux, dans lesquels se déplacent des pistons 29 portant des galets 30, qui roulent contre des cames, qui sont fixées sur la périphérie interne d'un carter 31, qui est fixé au moyeu 25.

Le mouvement radial des pistons successifs déplace les cames qui entraînent en rotation le carter et le moyeu de la roue. Les pistons sont alimentés en huile sous pression par deux canalisations 32, une pour l'aller et une pour le retour d'huile, qui sont creusées dans la fusée.

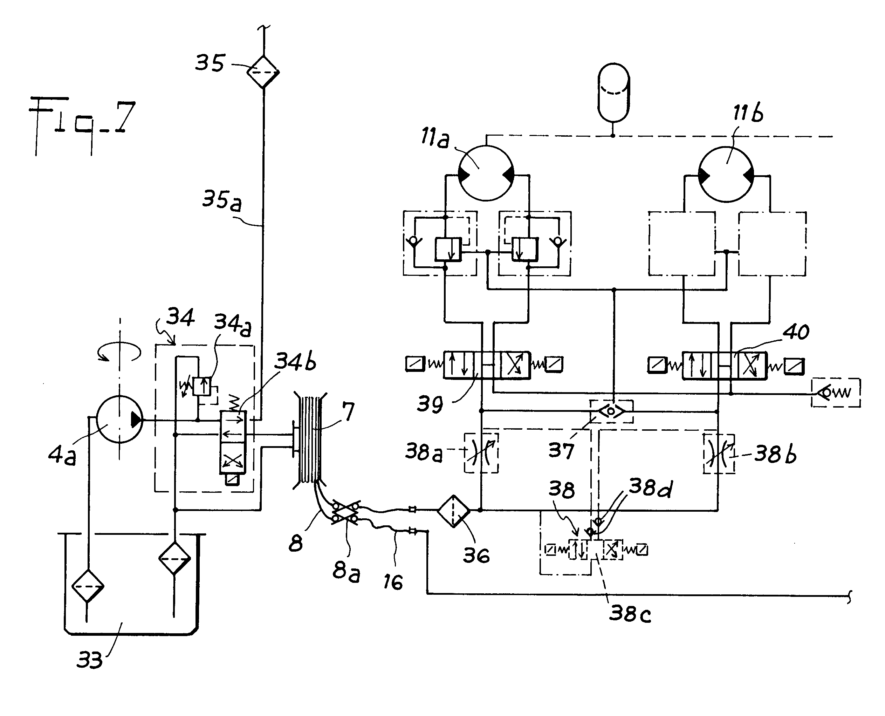

La figure 7 est un schéma des circuits hydrauliques alimentant deux moteurs hydrauliques 11a et 11b incorporés dans les deux roues équipant un essieu d'une remorque selon l'invention.

Le repère 4a représente la pompe du groupe hydraulique 4 qui est entraînée par un arbre de prise de force, lui-même entraîné par le moteur du tracteur 3.

Le repère 33 représente le réservoir d'huile. Le repère 34 représente un bloc électro-distributeur comportant un régulateur de pression 34a et un distributeur à tiroir 34b commandé par un électro-aimant.

Le repère 35 représente un filtre qui est placé sur une canalisation 35a, qui va alimenter des dispositifs auxiliaires non représentés.

Le repère 7 représente l'enrouleur sur l'axe duquel sont connectées la canalisation d'huile sortant du distributeur 34b et une canalisation de retour vers le réservoir 33.

Le repère 8 représente la double canalisation flexible enroulée sur l'enrouleur 7 et le repère 8a représente le raccord rapide situé à l'extrémité des deux canalisations flexibles 16 de la remorque.

Le repère 36 représente un filtre. Le repère 37 représente un clapet navette.

Le repère 38 désigne un dispositif destiné à obtenir un rayon de braquage constant.

Ce dispositif est représenté en pointillés car il est optionnel. Il est composé de deux régulateurs de débit 38a et 38b, d'un distributeur hydraulique à tiroir 38c commandé par des électro-aimants et de deux clapets anti-retour 38d.

Les repères 39 et 40 représentent deux distributeurs hydrauliques à tiroir commandés chacun par deux électro-aimants.

Les électro-aimants équipant les divers distributeurs hydrauliques sont commandés par un opérateur au moyen d'un manipulateur 41 à huit positions, qui permet de commander la marche avant ou la marche arrière rectiligne, la marche avant avec braquage à droite ou à gauche, la marche arrière avec braquage à droite ou à gauche et le braquage sur place à droite ou à gauche.

Les moteurs hydrauliques 11 équipant les roues de la remorque sont des moteurs qui tournent très lentement, par exemple à 3,5 tours/minute et qui consomment environ 12 ml/minute d'huile. Pour une pression d'huile de l'ordre de 350 bars (35 MPa), le couple obtenu est de l'ordre de 1.600 m.daN.

Les figures 1 à 3 représentent un mode de réalisation préférentiel, dans lequel le groupe hydraulique 4 qui alimente les moteurs hydrauliques 11, comporte une pompe qui est portée par le tracteur 3 et qui est entraînée en rotation par le moteur de propulsion dudit tracteur. Cette solution présente l'avantage que les remorques ne sont pas équipées d'un groupe hydraulique et leur coût de fabrication et d'exploitation est réduit.

En variante, le groupe hydraulique 4 peut être porté par un véhicule auxiliaire qui est relié par des flexibles aux moteurs de la remorque. Le même véhicule auxiliaire peut servir à manoeuvrer, de façon autonome, plusieurs remorques sur un aéroport ou dans un port.

## Revendications

1. Véhicule routier composé d'un véhicule tracteur (23) et d'une remorque (1) qui est attelée de façon amovible audit véhicule tracteur et dont les deux roues montées sur l'essieu avant sont équipées chacune d'un moteur hydraulique (11), lesquels moteurs peuvent être alimentés temporairement, soit simultanément, soit séparément, à partir d'un groupe hydraulique (4) porté par ledit véhicule tracteur ou par un véhicule auxiliaire, caractérisé en ce que lesdits moteurs hydrauliques (11) sont reliés audit groupe hydraulique (4) par des canalisations flexibles (8) et ledit essieu avant de la remorque est relié au châssis de celle-ci par un pivot (1a) à axe vertical, de telle sorte que la remorque peut être déplacée et dirigée de façon autonome lorsqu'elle est dételée dudit véhicule tracteur.

2. Véhicule routier selon la revendication 1 dans lequel le véhicule tracteur (3) porte un groupe hydraulique (4) qui est entraîné par le moteur dudit véhicule tracteur, caractérisé en ce que ledit véhicule tracteur porte un enrouleur (7), sur lequel une canalisation flexible (8) ayant une longueur d'une dizaine de mètres est enroulée.

3. Remorque pour véhicule routier selon l'une quelconque des revendications 1 et 2, caractérisée en ce que lesdits moteurs hydrauliques (11) comportent un stator (27), qui est fixé sur l'extrémité d'une fusée dudit essieu par des cannelures (28) et qui comporte des cylindres radiaux (29), qui coopèrent avec des cames fixées à la périphérie interne d'un rotor (31) qui est solidaire du moyeu (25) d'une roue.

4. Remorque pour véhicule routier selon l'une quelconque des revendications 1 et 2, caractérisée en ce que les circuits hydrauliques alimentant lesdits moteurs (11) comportent des distributeurs hydrauliques (39, 40) à tiroirs, commandés par des électro-aimants, lesquels électro-aimants sont reliés par un câble à un manipulateur portatif (41) ayant huit positions. qui permet de commander les déplacements de ladite remorque en marche avant ou arrière, en ligne droite ou en braquant à droite ou à gauche.

5. Véhicule routier selon l'une quelconque des revendications 1 et 2, caractérisé en ce qu'il est composé d'une remorque porte citerne qui est attelée derrière une semi-remorque porte-citerne, lequel véhicule est utilisé dans l'enceinte d'un aéroport ou d'un port pour ravitailler en carburants des avions ou des bateaux.

## Patentansprüche

1. Straßenfahrzeug, gebildet aus einer Zugmaschine (23) und einem Anhänger (1), der auf entfernbare Weise angehängt ist an der Zugmaschine, und dessen beide an der vorderen Tragachse angebrachten Räder jeweils mit einem Hydraulikmotor (11) ausgerüstet sind, wobei die Motoren zeitweise gespeist werden können, entweder gleichzeitig oder getrennt, ausgehend von einer Hydraulikanlage (4), die von der Zugmaschine oder von einem Hilfsfahrzeug getragen wird, dadurch gekennzeichnet, daß die hydraulischen Motoren (11) mit der Hydraulikanlage (4) durch biegsame Leitungen (8) verbunden sind und die vordere Tragachse des Anhängers mit dem Chassis von diesem durch einen Schwenkzapfen (1a) mit vertikaler Achse derart verbunden ist, daß der Anhänger selbständig bewegt und ausgerichtet werden kann, wenn er von der Zugmaschine abgehängt ist.

2. Straßenfahrzeug nach Anspruch 1, bei dem die Zugmaschine (3) eine Hydraulikanlage (4) trägt, die von dem Motor der Zugmaschine angetrieben wird, dadurch gekennzeichnet, daß die Zugmaschine einen Aufwickler (7) trägt, auf den eine biegsame Leitung (8) aufgerollt ist, die eine Länge von ca. 10 Metern aufweist.

3. Anhänger für Straßenfahrzeuge nach einem der Ansprüche 1 oder 2, dadurch gekennzeichnet, daß die hydraulischen Motoren (11) einen Stator (27), der am Ende eines Achsschenkels der Tragachse durch Kerben (28) befestigt ist, und der Radialzylinder (29) aufweist, die mit am inneren Umfang eines Rotors (31) befestigten Nocken zusammenwirken, der mit der Nabe (25) eines Rades verbunden ist.

4. Anhänger für Straßenfahrzeuge nach einem der Ansprüche 1 oder 2, dadurch gekennzeichnet, daß die hydraulischen Schaltkreise, die die Motoren (11) speisen, hydraulische Schiebeverteiler (39,40) aufweisen, die durch Elektromagneten gesteuert werden, wobei die Elektromagneten durch ein Kabel mit einem tragbaren Manipulator (41) verbunden sind, der 8 Stellungen aufweist, der die Bewegungen des Anhängers in Vorwärtsrichtung oder Rückwärtsrichtung, geradeaus oder nach links- oder rechtsdrehend steuert.

5. Straßenfahrzeug nach Anspruch 1 oder 2, dadurch gekennzeichnet, daß es gebildet wird aus einem Behälteranhänger, der hinten an einem Behälter-Sattel-Schlepper angehängt ist, wobei das Fahrzeug im Raum eines Flughafens oder eines Hafens verwendet wird, um Flugzeuge oder Schiffe mit Brennstoff zu versorgen.

via a cable with a portable eight-position-handling device (41) which enables the displacements of said trailer to be controlled in forward or reverse motion, in a straight line or to the right or the left.

5. Road vehicle according to any one of claims 1 and 2, characterized in that it is composed of trailer carrying a cistern which is attached to the back of a tank semi-trailer, which vehicle is used inside the enclosure of an airport or of a harbour for supplying fuel to aircrafts or to ships.

## Claims

1. Road vehicle composed of a towing vehicle (23) and of a trailer (1) which is removably coupled to said towing vehicle and of which each one of the two wheels mounted on the front axle are equipped with a hydraulic engine (11), said motors being able to be fed temporarily, either simultaneously, or separately, from a hydraulic unit (4) carried by said towing vehicle or by an auxiliary vehicle, characterized in that said hydraulic engines (11) are connected to said hydraulic unit (4) via flexible pipes (8) and said front axle of the trailer is connected to the chassis thereof via a pin (1a) of vertical axis, in such a way that the trailer can be moved and directed in independent manner when it is detached from said towing vehicle.

2. Road vehicle according to claim 1, wherein the towing vehicle (3) carries a hydraulic unit (4) which is driven by the engine of said towing vehicle, characterized in that said towing vehicle carries a winder (7) on which a flexible pipe (8) is wound, said pipe being about 10 meters long.

3. Trailer for road vehicle, according to any one of claims 1 and 2, characterized in that said hydraulic engines (11) comprise a stator (27) which is fixed on the end of a steering stub of said axle via grooves (28) and which comprises radial cylinders (29), which cylinders cooperate with cams fixed on the inner periphery of a rotor (31) which is fast with the axle (25) of a wheel.

4. Trailer for road vehicle according to any one of claims 1 and 2, characterized in that the hydraulic circuits feeding said engines (11) comprise hydraulic distributors (39, 40), controlled by electro-magnets, which electro-magnets are connected

Fig.1

Fig.2

EP 0 399 932 B1

Fig_3

EP 0 399 932 B1

Fig-4

5

5a

17

18

13

13a

19

Fig-5

14a

14

4a

20

21

22

Fig.6

Fig. 7